# EUROPÄISCHE PATENTSCHRIFT

(11) **EP 3 995 107 B1**
(45) Veröffentlichungstag und Bekanntmachung des Hinweises auf die Patenterteilung: **25.09.2024**
(21) Anmeldenummer: 20206313.7
(22) Anmeldetag: 06.11.2020
(51) Int. Cl.: A61C 13/00, A61C 13/34

(54) **DENTALRONDEN-HALTER UND ANORDNUNG AUS HALTER UND DENTALRONDE**
DENTAL BLANK AND ASSEMBLY CONSISTING OF HOLDER AND DENTAL BLANK
SUPPORT DE FLAN CIRCULAIRE DENTAIRE ET AGENCEMENT DU SUPPORT ET DU FLAN CIRCULAIRE DENTAIRE

(43) Veröffentlichungstag der Anmeldung: 11.05.2022
(73) Patentinhaber: Ivoclar Vivadent AG, 9494 Schaan (LI)
(72) Erfinder: LICHTENSTEIGER, Markus, 9462 Montlingen (CH); BERTAGNOLLI, Martin, 39035 Naturns (IT)
(74) Vertreter: Baldus, Oliver

(56) Entgegenhaltungen:
- DE-U1- 202010 018 128
- DE-U1- 202013 103 515
- DE-U1- 202017 006 526
- JP-B2- 6 571 511
- KR-B1- 101 528 355
- US-A1- 2015 174 716
- US-A1- 2018 055 612
- US-A1- 2018 200 851
- US-A1- 2019 167 393
- US-A9- 2017 333 168

## Beschreibung

Die Erfindung betrifft einen Dentalronden-Halter gemäß Anspruch 1.

Derartige Dentalronden-Halter und ihre Einzelteile, also die Halter und die Dentalronden, sind seid langem bekannt. Ein Beispiel hierfür ist die aus der DE 44 36 231 A1 bekannte Lösung. Die Dentalronde ist bei dieser Lösung vergleichsweise klein, vom Durchmesser her gesehen, und weist einen recht breiten Rand auf. Dieser Rand ist in einem Fräshalter eingespannt gehalten.

Die Dentalronde gemäß der genannten Druckschrift ist eher für Einzelzähne geeignet, wie es aus der dortigen Fig. 5 ersichtlich ist.

In den folgenden Jahren haben sich Scheiben durchgesetzt, die einen Durchmesser um 10 cm haben und aus fräsbarem Material bestehen und dafür bestimmt sind, mehrere Dentalrestaurationsteile aufzunehmen.

Diese werden typischerweise möglichst platzsparend auf der Dentalronde, die als Fräsrohling wirkt, angeordnet. Die Anordnung wird zunächst virtuell, also im Vorhinein, vorgenommen. Hieran anschließend wird der Fräsrohling eingespannt, in einem Fräshalter, und die Fräsmaschine, die für das Ausfräsen der Dentalrestaurationsteile bestimmt ist, beginnt ihre Arbeit.

Für ein höheren Präzisionserfordernissen genügendes Fräsen müssen die Dentalrestaurationsteile deutlich beabstandet voneinander vorgesehen sein, unter Belassung von Haltestegen.

Dies bedingt, dass versucht wird, die Anordnung der Dentalrestaurationsteile zu optimieren, aber auch, die Dentalronden oder Fräsrohlinge nach Möglichkeit bis zum Rand auszunutzen.

Damit einhergeht die Wahl des Materials des zu verwendenden Fräsrohlings. Aus ZrO₂ bestehende Rohling können durchaus um 500 € kosten.

Andererseits ist es erforderlich, für die Lagerung der Dentalronden eine ausreichende Stabilität sicherzustellen. Man will zwar möglichst wenig "Fräsraum" an die Lagerung verschwenden, dennoch muss natürlich die Lagerung ausgesprochen stabil sein, nachdem Fräskräfte von mehreren 100 N erforderlich sind.

Aufgrund der Notwendigkeit, das teure Rohlingsmaterial möglichst effizient auszunutzen, hat man versucht, möglichst stabile Fräshalter zu schaffen, beispielsweise gemäß der DE 20 2010 001 125 U1.

Eine weitere, verbesserte Lösung ist aus der DE 20 2013 103 515 U1 ersichtlich. Der Fräshalter greift bei dieser Lösung an einem vorspringenden Rand an, der an dem Rohling ausgebildet ist.

Bei Bedarf kann auch ein kleinerer Rohling eingesetzt werden, der entsprechend günstiger ist.

Ferner ist aus der DE 10 2015 204 174 A1 eine Haltevorrichtung für einen Dentalrohling bekannt, bei der ein Kunststoffring zur Befestigung des Dentalrohlings oder der Dentalronde eingesetzt wird. Das dortige Fixierelement soll Stellelemente aufweisen, die der Einspannung dienen sollen.

Bei derartigen Stellelementen kann es sich um Madenschrauben, Gewindestifte, Excenter oder Excenterhebel handeln.

Diese Lösung hat sich nicht durchgesetzt. Das Problem ist die praktische Realisierung und die Komplexität, auch im Zusammenwirken mit dem verwendeten Fräshaltern.

Die Druckschrift US 2017/333168 A9 betrifft einen Haltevorrichtung für Dentalrohlinge und eine Rohlingsanordnung mit der Haltevorrichtung. Ein Fixierelement kann auch aus zwei unterschiedlichen Einzelelementen aufgebaut sein, die aus unterschiedlichen Materialien bestehen. So kann ein Metallaußenring die Kräfte der lokal einwirkenden Stellelemente aufnehmen, ohne durch diese Stellelemente beschädigt zu werden.

Die Druckschrift US 2018/055612 A1 betrifft einen Fräsrohling für dentales CAD/CAM mit einer säulenförmigen Scheibenform. In dem in einem Halteabschnitt wird der Fräsrohling für dentales CAD/CAM gehalten, indem eine Seite von zwei halbzylindrischen Elementen durch ein Scharnier 4 verbunden wird. Demgegenüber liegt der Erfindung die Aufgabe zu Grunde, einen Dentalronden-Halter gemäß dem Oberbegriff von Anspruch 1 und einer Anordnung aus Halter und Dentalronde gemäß dem Oberbegriff von Anspruch 2 zu schaffen, die das Problem der Fixierung der Dentalronde im Halter besser und hinsichtlich des Dentalronden-Materials materialsparender lösen, ohne dass Handhabungs- oder Kostennachteile entstehen.

Diese Aufgabe wird erfindungsgemäß durch Anspruch 1 gelöst. Vorteilhafte Weiterbildungen ergeben sich aus den Unteransprüchen.

Erfindungsgemäß ist eine besondere Ausgestaltung des Halters vorgesehen. Hier sei unter "Fräshalter" die Einspannvorrichtung der Fräsmaschine zur Aufnahme der Dentalronden zu verstehen, während der erfindungsgemäße Halter im Grunde während seiner gesamten Lebensdauer an der Dentalronde fixiert ist und zusammen mit dem gefrästen und nicht mehr benötigten Rest der Dentalronde verworfen wird.

Erfindungsgemäß ist es vorgesehen, dass der Halter aus mindestens zwei Teilen besteht. Die zwei oder mehrere Teile umspannen die Dentalronde und sind an ihren jeweiligen Enden miteinander verbunden. Der erste Teil ist an seinem ersten Ende mit der ersten Ende des zweiten Teils verbunden, und der erste Teil ist mit seinem zweiten Ende am zweiten Ende des zweiten Teils verbunden.

Es ist auch möglich, dass die Teile an einer Stelle aneinander fixierbar und an der gegenüberliegenden Stelle über eine Gelenk, insbesondere ein Filmscharnier, miteinander verbunden sind. Durch diese Ausführungsform ist der Halter gleichsam aufklappbar und durch Einschnappen einer Rastverbindung die Dentalronde in ihm fixierbar.

Der Montageaufwand ist geringer.

Die Rastverbindung erfolgt bevorzugt unter Realisierung von Zugspannungen. Die Zugspannungen führen dazu, dass in den Teilen, die sich zu einem Kreis ergänzen, in Umfangsrichtung Zugspannungen bestehen, die dementsprechend radial einwärts wirken und die Dentalronde radial einwärts unter Druck setzen.

Es ist aber auch möglich, dass die Teile des Halters bei der Montage die Dentalronde lediglich umgeben, ggf. mit einem Luftspalt zwischen 0,1 und 0,5 mm, der auch dem Toleranzausgleich dient.

Diese Lösung ist dann bevorzugt, wenn die eigentliche Lagerung in einem zweiten Schritt, unter Verwendung von Klebstoff erfolgt.

Auch die Verwendung eines expandierenden Klebstoffs wie PUR ist möglich; bevorzugt wird bei einem solchen vor dem Klebstoff ein Luftspalt von z.b. 0,2 mm, aber auch zwischen 0,1 mm und 0,5 mm, belassen, der beim Expandieren durch den Klebstoff ausgefüllt wird.

Der durch die Expansion erzeugten Druck bewirkt einem Überdruck in dem - engen - Spalt zwischen Halter und Ronde, der im Ergebnis zu einem besonders guten Andruck des Klebstoffs an den angrenzenden Flächen von Ronde und Halter führt.

Wenn die Dentalronde aus Kunststoff wie PMMA besteht, lässt sich auch eine Stoffschlußverbindung herstellen. Hierzu wird den Außenumfang der Ronde durch den Klebstoff angelöst.

In vorteilhafter Ausgestaltung sind die Teile über Rastverbindung miteinander verbunden, die dafür geeignet sind, Zugspannungen auszuüben.

In weiterer vorteilhafter Ausgestaltung ist es vorgesehen, dass die Teile des Halters über die kraftschlüssige Verbindung, wie sie vorstehend erläutert wurde, auch materialschlüssig verbunden werden. Dies kann beispielsweise durch ein eingelegtes Doppelklebeband, über Ultraschall, über Laserschweißen oder auch mit einem beliebigen anderem Klebeprozess geschehen. Damit ist ein kraft- und materialschlüssiger Verbund realisierbar.

Wenn die Teile des Halters im Querschnitt zudem C-förmig sind, so dass sie die Dentalronde an ihrer Oberseite und an ihrer Unterseite übergreifen können, ist darüber hinaus eine formschlüssige Verbindung realisierbar, also gleichsam gleichzeitig alle drei möglichen Arten von Verbindungen.

Anstelle der C-Form - im Querschnitt des Halters betrachtet - ist auch eine L-Form möglich. Der obere Endschenkel entfällt bei dieser Lösung, aber der untere Endschenkel dient dann gleich als Anschlag und als Montagehilfe, der die Höhenlage der Ronde vorab festlegt.

Überraschend ergibt die erfindungsgemäße Lösung, über die Teilung des Halters in Unfangsrichtung und das Zusammenfügen der Teile zur Bereitstellung des Halters für die Dentalronde eine Einsparung des teuren Dentalrondenmaterials.

Die Ronden können mit vergleichsweise wenig Kraftaufwand gehalten und bearbeitet werden. Die Materialkosten für den erfindungsgemäßen Halter können sich beispielsweise auf 1 € belaufen, also um mehr als zwei Größenordnungen weniger als die Materialkosten der Dentalronde.

Überraschend ist die erfindungsgemäße Anordnung aus Dentalronde und Halter besonders gut geeignet, in die vorhandenen Fräshalter oder Spannvorrichtungen der Fräsmaschinen eingesetzt zu werden. Die Schnapprastfunktion endseitig der Teile lässt sich ohne weiteres in den Verlauf des Halters integrieren, also ohne dass eine Aussparung an dem Fräshalter realisiert werden müsste, um die Rastvorrichtungen aufzunehmen.

Hierzu können beispielsweise an sich bekannte Rastvorrichtungen mit Rastzungen und Rastvorsprüngen realisiert sein.

Der erfindungsgemäße Halter beeinträchtigt auch nicht die Möglichkeit, die Dentalronde soweit wie möglich auszunutzen. Der Randabstand, also der ausnutzbare Teil des zu fräsenden Fräsrohlings oder zu fräsenden Dentalronde kann sogar noch etwas reduziert werden. Dies liegt darin begründet, dass der Fräsrohling typischerweise aus einem zu sinternden Material besteht. Dieses ist sehr druckfest, aber weniger zugfest. Durch die Spannung, die der erfindungsgemäße Halter radial einwärts ausübt, werden die Kraftvektoren, die beim Fräsen ausgeübt werden, in Richtung Druck verschoben, so dass die Belastbarkeit der Dentalronde durch Fräskräfte steigt.

Erfindungsgemäß ist es besonders günstig, wenn die Teile als Halbschalen ausgebildet sind, die zusammen und aneinander angeklipst den Halter bilden. Beide Halbschalen oder oder die mehreren Teile werden in einem ersten Montageschritt aneinander eingerastet, wozu sie endseitig je über geeignete Rastvorrichtungen verfügen.

Bereits in diesem Zustand üben die beiden Halbschale als Halter einen Druck auf die Dentalronde aus.

In einem zweiten Schritt werden die beiden Halbschalen als Halter auf der Dentalronde unlösbar fixiert. Dies kann mittels Ultraschall, Laserschweißen oder auch mittels eines Klebeprozesses erfolgen.

In vorteilhafter Ausgestaltung der Erfindung ist es vorgesehen, dass der Endschenkel oder die Endschenkel des Halters mindestens eine Schrägfläche aufweist, mit welcher die Dentalronde unter Vorspannung zwischen den Endschenkeln setzbar ist.

Die beiden Halbschalen können aus Kunststoff bestehen, wobei es auch möglich ist, den radial inneren Bereich in Form einer elastischeren oder weicheren Kunststoffschicht auszuführen, und den radial äußeren Bereich aus einem härteren Kunststoff.

In weiterer vorteilhafter Ausgestaltung der Erfindung ist es vorgesehen, dass Dentalronden-Halter aus mindestens zwei Komponenten besteht, deren härtere die weichere übergreift. In weiterer vorteilhafter Ausgestaltung der Erfindung ist es vorgesehen, dass die radial einwärts weisende Fläche des Halters von und an der weicheren Komponente gebildet ist.

Durch das unlösbare Fixieren können die Dentalronden auch mit weniger Kraftaufwand gehalten und bearbeitet werden.

Die Lagerung in dem Fräshalter kann an einem Formschlussprofil des Halters erfolgen, und der Halter kann die Dentalronde übergreifen, also sowohl an ihrer Oberseite als auch an ihrer Unterseite anliegen und somit im Querschnitt ein C-Profil bilden.

Die Dentalronden können aus beliebigen geeigneten Materialien bestehen, beispielsweise auch ZrO₂, PMMA, Titan, Co-Cr sowie anderen geeigneten Materialien, die subtraktiv spanabhebend bearbeitet werden müssen.

Weitere Vorteile, Einzelheiten und Merkmale der Erfindung ergeben sich aus der nachfolgenden Beschreibung mehrerer Ausführungsbeispiele der Erfindung anhand der Zeichnungen.

Es zeigen:
- Fig. 1: einen Dentalronden-Halter und eine Dentalronde, in noch nicht zusammengesetzten Zustand, in einer Ausführungsform der Erfindung;
- Fig. 2: die Kombination aus Dentalronden-Halter und Dentalronde in zusammengesetzten Zustand;
- Fig. 3: eine perspektivische Ansicht einer Halbschale oder eines Teils des erfindungsgemäßen Halters in einer Ausführungsform;
- Fig. 4: eine weitere Ausführungsform eines erfindungsgemäßen Dentalronden-Halters mit eingesetzer Dentalronde;
- Fig. 5: ein Detail einer weiteren Ausführungsform eines Dentalronden-Halters;
- Fig. 6: eine perspektivische Ansicht eines Dentalronden-Halters mit einer eingesetzten Dentalronde;
- Fig. 7: eine schematische perspektivische Ausschnitt-Ansicht einer Ausführungsform einer Dentalronde mit dem integrierten
- Fig. 8: Dentalronden-Halter; diese Ausführungsform ist nicht Teil der Erfindung; eine schematische Schnittansicht zur Verdeutlichung einer Modifikation der Ausführungsform gemäß Fig. 5 oder gemäß Fig. 7, zur Darstellung des Formschlussprofils;
- Fig. 9: eine weitere Modifikation der Darstellung gemäß Fig. 8;
- Fig. 10: eine weitere Modifikation der Darstellung gemäß den Fig. 8 und 9;
- Fig. 11: eine modifizierte Darstellung eines Dentalronden-Halters, unter Bereitstellung alternativer Formschlussprofile; diese Ausführungsform ist nicht Teil der Erfindung;
- Fig. 12: eine schematische Darstellung einer Ausführungsform eines Fräshalters, des Dentalronden-Halters sowie eines Dentalronden-Wechslers, in auszugsweiser Darstellung; diese Ausführungsform ist nicht Teil der Erfindung;
- Fig. 13: eine Schnittansicht zu der Ausführungsform gemäß Fig. 12; und
- Fig. 14: eine modifizierte Ausführungsform zu der Darstellung gemäß Fig. 12.

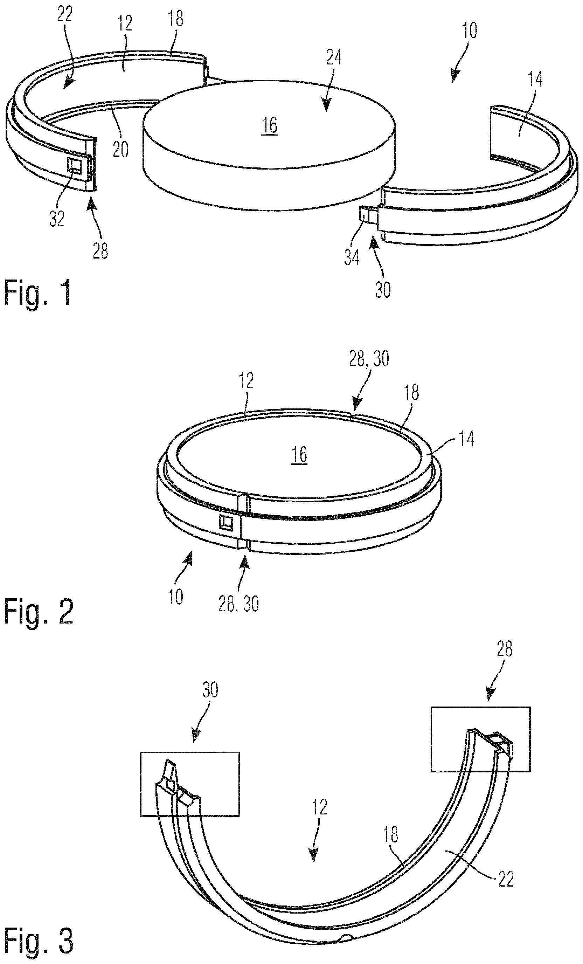

In Fig. 1 ist ein Dentalronden-Halter 10 in perspektivischer Ansicht in Explosionsdarstellung ersichtlich. Der Dentalronden-Halter 10 besteht aus einem ersten Teil oder einer ersten Halbschale 12 und einem zweiten Teil oder einer zweiten Halbschale 14. Jede Halbschale 12 oder 14 ist im wesentlichen halbkreisförmig und dafür bestimmt, eine Dentalronde 16 zu umgeben. Die Dentalronde 16 ist in an sich bekannter Weise als flachzylindrischer Körper, beispielsweise aus ZrO₂ ausgebildet und hat einen Durchmesser von etwa 100 mm.

Der Dentalronden-Halter 10 weist im Wesentlichen den gleichen Innendurchmesser wie der Außendurchmesser der Dentalronde 16 auf. Im Querschnitt betrachtet ist das Profil des Halters 10 im wesentlichen C-förmig, also mit einem oberen Endschenkel 18, einem unteren Endschenkel 20 und einem Mittelschenkel 22.

Die Höhe des Mittelschenkels 22 entspricht der Höhe der Dentalronde 16. Damit liegt der obere Endschenkel 18 oben auf der Dentalronde 16 auf, und der untere Endschenkel 20 unten an der Dentalronde 16. Insofern übergreift der Halter 10 die Dentalronde 16 allseits.

Die Fläche der Oberseite 24 der Dentalronde 16 ist durch dieses Überlappen bzw. radial einwärts gerichtete Vorsprungmaß des Halters 10 etwas reduziert. Dies beeinträchtigt jedoch nicht die Fräsbarkeit, denn das Material des Halters 10 ist Kunststoff und damit ebenso fräsbar.

Beide Halbschalen 12 und 14 weisen endseitig je Rastvorrichtungen auf, von denen aus Fig. 1 eine weibliche Rastvorrichtung 28 und eine männliche Rastvorrichtung 30 ersichtlich sind. Die Rastvorrichtung 28 weist eine Rastausnehmung 32 und die Rastvorrichtung 30 eine Rastzunge 34 auf. Die Rastzunge 34 ist dafür bestimmt, an einer Hinterschneidung der Rastausnehmung 32 einzurasten.

Fig. 2 zeigt den Zustand, in welchem der Halter 10 die Dentalronde 16 übergreift und in dem die Rastvorrichtungen 28 und 30 - und die diesen gegenüberliegenden, entsprechenden Rastvorrichtungen - aneinander eingerastet sind. In diesem Zustand steht die Dentalronde 16 unter Druck, denn der Halter 10 übt eine Vorpannung auf die Dentalronde 16 aus.

In dem dargestellten Ausführungsbeispiel ist in dem Mittelschenkel 22 ein doppelt wirkendes Klebeband eingelegt. Durch die Wirkung der Vorspannung wird dieses angedrückt und die Dentalronde 16 ist fest in dem Halter 10 fixiert.

In einer modifizierten Ausgestaltung ist anstelle des doppelt wirkenden Klebebands ein wärmehärtender Klebstoff oder ein bei sichtbarem Licht härtender Klebstoff aufgebracht. In beiden Fällen ist es günstig, wenn das Material des Halters 10 bei sichtbarem Licht aus durchsichtigen Kunststoff besteht. Durch die zugeführte Strahlung, sei es Lichtstrahlung oder Wärmestrahlung, wird der Klebstoff ausgehärtet und die Dentalronde 16 fest mit diesem verbunden.

In einer noch weiteren Ausführungsform ist innen an dem Halter 10 eine elastische, weiche Schicht angebracht. Diese ist besonders geeignet, die erwünschte Vorspannung auszuüben und an die Dentalronde 16 weiterzugeben.

In einer alternativen Ausführungsform, die nicht Teil der Erfindung ist, ist eine der Rastvorrichtungen 28,30 durch ein Gelenk ersetzt. Die beiden Teile 12 und 14 sind durch das Gelenk um eine vertikale Achse schwenkbar miteinander verbunden.

Bei dieser Ausführungsform ist es möglich, beide Teile gemeinsam einstückig, z.B. mittels Spritzgießens, herzustellen. Zudem ist die Montage der Ronde 16 im Halter 10 vereinfacht, denn zur Montage können die Teile 12,14 einfach auseinandergeschwenkt oder aufgespreizt werden. Durch Zusammenschwenken und Einrasten an der dem Gelenk gegenüberliegenden Rastvorrichtung 28,30 ist die Ronde 16 bereits im Halter 10 eingespannt und montiert.

Aus Fig. 3 ist eine Halbschale 12 in einer anderen perspektivischen Ansicht ersichtlich. Es ist ersichtlich, dass die Endschenkel 18 und 20 um weniges radial einwärts vorspringen, beispielsweise um 2 mm. Dieses Vorsprungmaß reicht dennoch aus, die erwünschte Fixierung zu gewährleisten.

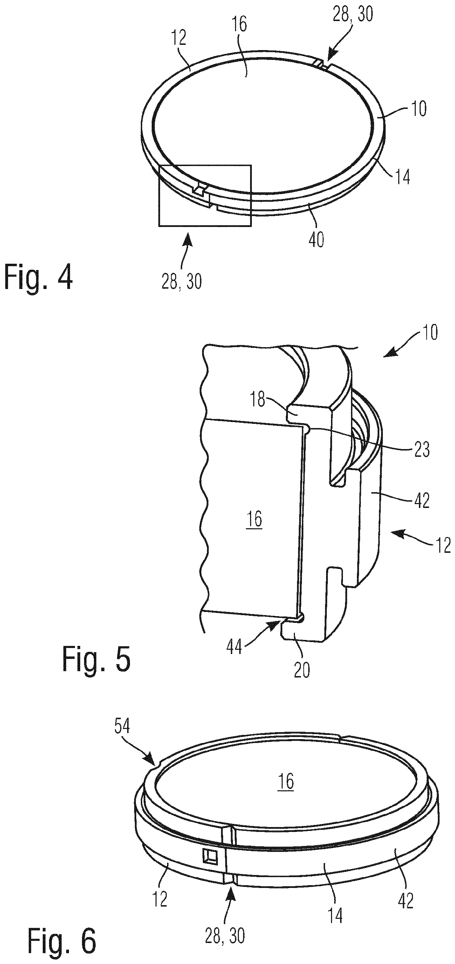

Eine weitere Ausführungsform einer erfindungsgemäßen Dentalronde 16 und eines erfindungsgemäßen Dentalronden-Halters 10 ist aus Fig. 4 ersichtlich. Die dort dargestellten Rastvorrichtungen 28 und 30 weisen anders gestaltete Rastzungen 34 und Rastausnehmungen 32 auf. Der Halter 10 weist nach radial auswärts einen vorspringenden Ring 40 auf, der vom Fräshalter 48, der aus Fig. 4 nicht ersichtlich ist, übergriffen wird und damit die Dentalronde 16 fixiert.

Aus Fig. 5 ist eine modifizierte Ausgestaltung eines erfindungsgemäßen Halters 10 ersichtlich. Diese Lösung unterscheidet sich von der Lösung gemäß den Ausführungsformen gemäß Fig. 1 bis Fig. 4 durch ein Hinterschnitt-Profil 42, das radial außen angebracht ist und für den Eingriff des Fräshalters an dieser Stelle bestimmt ist. Das Profil des Halters 10 radial einwärts betrachtet ist wiederum im wesentlichen C-förmig, und der Halter 10 übergreift die Ronde 12 mit dem oberen Endschenkel 18 und dem unteren Endschenkel 20. Beide Endschenkel 18 und 20 sind über den Mittelschenkel 22 miteinander verbunden.

Sie liegen spielfrei auf der Dentalronde 16 auf, nach Möglichkeit unter Vorspannung.

Die Übergänge der Endschenkel 19 bzw. 20 zum Mittelschenkel 22 weisen innen eine Eckausnehmung 23 auf, die bevorzugt einen kleinen Radius hat. Dieser kann sich auch um die Eck-Kante der Dentalronde 16 herum erstrecken und diese so freistellen. Der Innenradius erstreckt sich am Übergang des Endschenkels 18 zum Mittelschenkel 22 und des Endschenkels 20 zum Mittelschenkel 22. Er dient zugleich als Kantenschutz für die bruchempfindliche radial äußere Kante der beispielsweise aus Keramik bestehenden Dentalronde 16.

In einer modifizierten Ausgestaltung weist die Dentalronde 16 ein geringes Übermaß gegenüber dem Abstand zwischen dem Endschenkel 18 und dem Endschenkel 20 auf. Durch dieses Übermaß ist es für die Montage und als Toleranzausgleich möglich, den Halter 20 in Form der zugehörigen Halbschale 12 auf die Ronde 16 aufzudrücken. Hierzu weist jeder Endschenkel 20 endseitig eine Einführschräge 44 auf. Die Einführschräge 44 erleichtert die Einführung der Dentalronde 16 in das C-Profil der Halbschale 12.

In dem dargestellten Ausführungsbeispiel ist als Hinterschnitt-Profil 42 ein Schwalbenschwanzprofil vorgesehen. Es versteht sich, das auch eine beliebige andere Hinterschneidung möglich ist, ohne den Bereich der Erfindung zu verlassen.

Aus Fig. 6 ist ersichtlich, dass der Halter 10 eine Kerbe 54 aufweist, die dem oberen Endschenkel 18 benachbart ist. Die Kerbe 54 dient als Verdrehsicherung und korrespondiert mit einem entsprechendem Fühler oder einem in die Kerbe 54 eingreifenden Vorsprung an der Fräsmaschine.

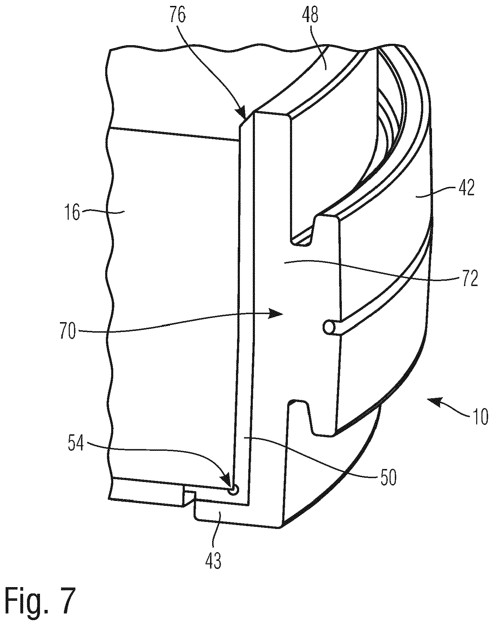

Aus Fig. 7 ist eine weitere Ausführungsform der Erfindung mit einem L-förmigen Profil 70 des Halters 10 in einem Ausschnitt ersichtlich. Das Profil 70 besteht aus einem vertikalen Schenkel 72, an dem radial außen das Formschlussprofil 42 angeformt ist, sowie einem unten von diesem ausgehend und sich radial einwärts erstreckenden horizontalen Schenkel 43, der dem unteren Endschenkel eines C-Profils entspricht.

Am Übergang zwischen diesen Schenkeln 72 und 43 ist innen eine Nut 54 vorgesehen, die eine Bruchkante einer eingelegten Keramik-Dentalronde 16 vollständig freistellt.

Das L-Profil 72 aus einer härteren Komponente 48 ist innen vollständig mit einer weicheren Komponente 50 ausgekleidet.

Nachdem das L-Profil 72 nach oben offen ist, ist es möglich, von dort eine Dentalronde 16 in den Halter 10 einzuführen. Zur Erleichterung des Einführens weist die innere, weichere Komponente 48 eine Einführschräge 76 auf. Ferner erstreckt sich der Halter 10 nach oben über die Dentalronde 16 hinaus, so dass sie dort sicher geschützt aufgenommen ist.

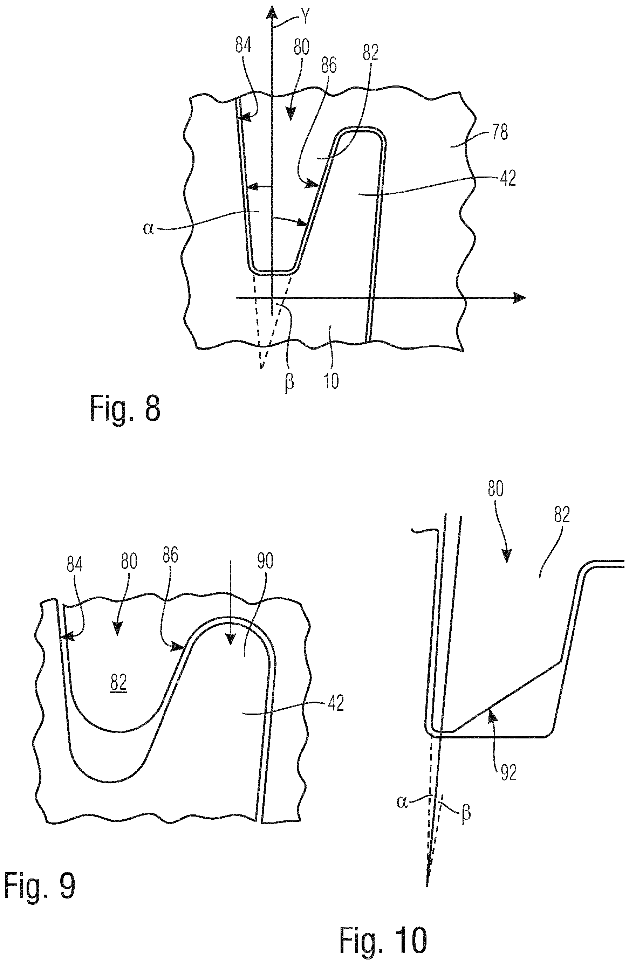

Aus Fig. 8 ist eine Ausschnittansicht eines Dentalronden-Halters 10, der in Eingriff mit einem partiell dargestellten Fräshalter 78 steht, ersichtlich. Die Lagerung des Halters 10 in dem Fräshalter 78 erfolgt über ein Hinterschnitt-Profil 42, im dargestellten Ausführungsbeispiel einem Schwalbenschwanzprofil.

Die nachstehenden Erläuterungen dienen auch zur Verdeutlichung dessen, dass zahlreiche beliebige Ausgestaltungen eines Formschlussprofils möglich sind, ohne den Bereich der Erfindung zu verlassen.

In an sich bekannter Weise weist das Formschlussprofil eine Nut 80 auf, in die ein Steg 82 des Fräshalters 78 eingreift.

Aus Fig. 8 ist der obere Teil des Schwalbenschwanzprofil 24 und Fräshalters 78 ersichtlich, und es versteht sich, dass hierzu spiegelsymmetrisch der untere Teil ausgebildet ist.

Die Nut 80 hat eine rondenseitige Nutflanke 84 sowie eine fräshalterseitige Nutflanke 86.

Ferner ist in Fig. 8 eine Bewegungsachse Y des Fräshalters 78 eingezeichnet, entlang derer die beiden Fräshalterhälften, also die hier dargestellte obere und die untere, verfahrbar sind.

Wie aus Fig. 8 ersichtlich ist, besteht ein Winkel α zwischen der Achse Y und der rondenseitigen Nutflanke 84, und ein Winkel β zwischen der Achse Y und gegenüber der fräshalterseitigen Nutflanke 86.

Diese Winkel können in weiten Bereichen an die Erfordernisse angepasst werden. Der Winkel **α** kann beispielsweise 1° bis 8° betragen und beträgt im Beispielsfall 5°.

Demgegenüber ist bevorzugt der Winkel ß größer, nämlich zwischen 1° und 45°, bevorzugt zwischen 5° und 20° und im dargestellten Ausführungsbeispiel 15°.

Größere Winkel haben den Vorteil, dass Toleranzen besser aufgenommen werden können, während kleinere Winkel zu einer besseren Fixierung mit geringeren Haltekräften führen.

Hier kann in weiten Bereichen eine Anpassung an die Erfordernisse erfolgen.

Gemäß Fig. 8 erstreckt sich der Steg 82 so in die Nut 80 hinein, dass diese vollständig oder nahezu vollständig ausgefüllt ist. Dies ist jedoch nicht unbedingt erforderlich, wie sich unter anderem aus Fig. 9 und 10 und dem zugrunde liegenden Überlegungen ergibt. Nachdem das Hinterschnit-Profil 42 sich ebenfalls mit einem oberen Teil und einem unteren Teil erstreckt, und beide Teile des Fräshalters 78 für die Bereitstellung des Formschlusses aufeinander zu bewegt werden, ergibt sich die vertikale Höhenfestlegung durch die Anlage am Ende 90 des Profils 42, über die dortige horizontale Fläche.

Für die Übertragung der Fräskräfte ist eine Abstützung gegen Momente wichtig, die um den Auflagepunkt oder die Auflagelinie wirken wirkt sich die Zweiteiligkeit des Fräshalters 78 und damit des Formschlussprofils, und der so erzeugte lange Lastarm günstig aus und im hier betrachteten oberen Teil muss lediglich ein Teil der Kräfte aufgefangen werden.

Für die Momentenaufnahme ist die großflächige Anlage zwischen dem Steg 82 und der rondenseitigen Nutflanke 84, aber auch der fräshalterseitigen Nutflanke 86 erforderlich. Diese muss jedoch nicht über die ganze Höhe der Nut 80 erfolgen, so dass es ausreicht, wenn der Steg 82 sich nur im oberen Teil in die Nut 80 hinein erstreckt. An dieser Stelle ist die Hebelwirkung am besten.

Eine demgegenüber modifizierte Ausgestaltung ist aus Fig. 10 ersichtlich. Auch hier erstreckt sich der Steg 82 nicht vollständig diese ausfüllend in die Nut 80 hinein. Vielmehr ist eine Einführschräge 92 an der unteren/radial äußeren Stelle des Stegs 82 ausgebildet. In diesem Ausführungsbeispiel sind zudem die Winkel **α** und ß wesentlich kleiner, nämlich **α** = 2° und ß = 4°.

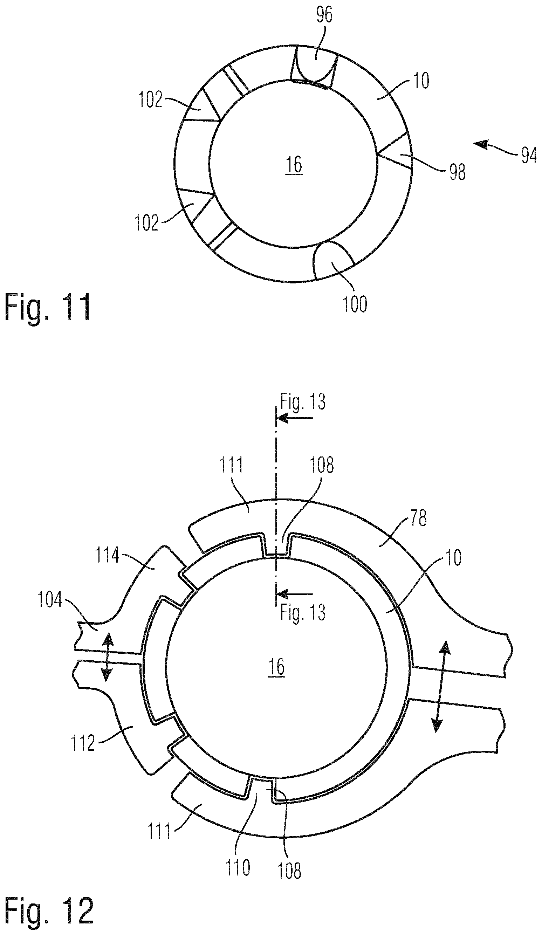

Eine weitere Ausgestaltung eines Dentalronden-Halters 10 ist aus Fig. 11 schematisch ersichtlich. Diese Ausgestaltung ist nicht Teil der Erfindung. Bei dieser Ausgestaltung ist der Halter 10 bereichsweise mit Formschlussausnehmungen 94 versehen. Diese können ungleichmäßig um den Halter 10 verteilt sein und untereinander gleich, aber auch untereinander unterschiedliche Formen aufweisen.

Lediglich beispielhaft ist hier eine quaderförmige Ausnehmung 96, eine Kegel-Ausnehmung 98 und eine Halbkugel-Ausnehmung 100 dargestellt. Anstelle der Kegel-Ausnehmung 98 kann auch eine dreieckförmige Ausnehmung realisiert sein, und es sind beliebige andere Formen möglich .

In dem dargestellten Ausführungsbeispiel erstrecken sich die hier beschriebenen Formschlussprofile über einen Winkel von weniger als 360°, beispielsweise über 240°. Sie sind dafür bestimmt, entsprechende geeignete geformte Zapfen des Fräshalters 78 aufzunehmen.

Der Fräshalter 78 ist bei dieser Lösung bevorzugt nicht in horizontaler Richtung, sondern in vertikaler Richtung teilbar. Ferner ist der in der Darstellung gemäß Fig. 11 linke Bereich der Halters 10 mit Ausnehmungen 102 vorbereitet, die für den Eingriff über einen Wechsler eines Werkstücksmagazins bestimmt sind.

Für den Wechsel der bearbeiteten Dentalronde 12 erfasst ein hierfür geeigneter Wechsler den Halter 10 an den Ausnehmungen 102, und der Fräshalter 78 gibt die Dentalronde 16 mit dem Halter 10 in bearbeiteter Form frei. Der Wechsler entfernt die Ronde 16 aus dem Fräsbereich und legt den Fräshalter 78 eine neue Ronde 16 vor, die bearbeitet werden muss.

In dem dargestellten Ausführungsbeispiel erstreckt sich der Zugriffsbereich des Wechslers über deutlich weniger als 180°, beispielsweise über 120°.

Eine weitere Ausführungsform eines derartigen Fräshalters 78 in Zusammenwirken mit einem Wechsler 104 ist aus Fig. 12 ersichtlich. Diese Ausführungsform ist nicht Teil der Erfindung. Dort sind zwei trapezförmige Ausnehmungen 108 an unterschiedlichen und zueinander asymmetrischen Winkelpositionen des Halters 10 vorgesehen. In diese greifen entsprechende Zapfen 110 des Fräshalters 78 ein.

Wie ersichtlich ist, ist auch hier der Fräshalter 78 mit einer vertikalen Trennebene geteilt. Beide Zinken 111 des Fräshalters 78 übergreifen die Dentalronde 12 mit ihrem Halter 10 um etwa 230°, und der Wechsler 104, der ebenfalls zwei Zinken 112 und 114 mit vertikaler Trennebene hat, hat einen Umschlingungswinkel von etwa 120° gegenüber dem Halter 10.

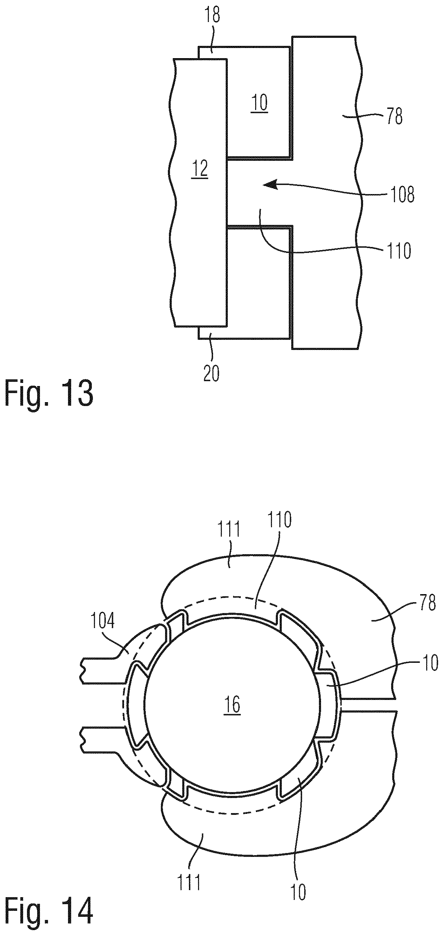

Ein Schnitt durch ein Detail aus Fig. 12 ist aus Fig. 13 ersichtlich. Wie ersichtlich ist, erstreckt sich die Ausnehmung 108 lediglich über den mittleren Teil der Höhe des Halters 10. Der Zapfen 110 füllt diese aus. Damit ist der erwünschte Formschluss sichergestellt.

Wie ersichtlich ist, ist der Halter 10 auch bei dieser Ausführungsform im Schnitt C-förmig, so dass er mit seinen Endschenkeln 18 und 20 die Ronde 12 übergreift.

Eine weitere Ausführungsform eines Dentalronden-Halters 10 mit zugehörigem Fräshalter 78 ist aus Fig. 14 ersichtlich. Diese Ausführungsform ist nicht Teil der Erfindung. Gleiche Bezugszeichen weisen hier wie auch in den weiteren Figuren auf gleiche Teile hin, und auch dieser Halter 10 ist für die Realisierung eines Wechslers 104 für eine Fräsmaschine mit einem Werkstückmagazin bestimmt.

## Patentansprüche

1. Dentalronden-Halter, **dadurch gekennzeichnet, dass** der Halter (10) aus mindestens zwei Teilen (12,14) besteht, die bestimmt sind, eine Dentalronde (16) zu umgeben und/oder zu lagern, insbesondere, diese kraftschlüssig, stoffschlüssig und/oder formschlüssig zu fixieren und die Teile (12,14) endseitig je Rastvorrichtungen (28,30) aufweisen, mittels welcher Rastvorrichtungen (28,30) die Teile (12,14) aneinander einrastbar sind.

2. Dentalronden-Halter nach Anspruch 1, **dadurch gekennzeichnet, dass** der Halter (10) so ausgebildet ist, dass er beim Einschnappen der Rastvorrichtungen (28,30) die Dentalronde (16) kraftschlüssig, insbesondere unter Vorspannung, umspannt und fixiert.

3. Dentalronden-Halter nach einem der vorhergehenden Ansprüche, **dadurch gekennzeichnet, dass** der Halter (10) Kunststoff aufweist oder aus Kunststoff besteht und/oder dass er an seinem Innenumfang so ausgebildet ist, dass er an der Dentalronde (16) durch Schweißen, Schrumpfen und/oder Kleben befestigbar ist.

4. Dentalronden-Halter nach einem der vorhergehenden Ansprüche, **dadurch gekennzeichnet, dass** sich an der Oberseite (24) und/oder der Unterseite des Halters (10) ein Endschenkel (18,20) des Halters (10) radial einwärts erstreckt, mit welchem Endschenkel (18,20) oder mit welchen Endschenkeln (18,20) eine Dentalronde (16) formschlüssig lagerbar ist und/oder dass der Halter (10) im Querschnitt ein C-Profil oder ein L-Profil aufweist, und insbesondere, dass die Innenseite des L-Profils als Anschlag und Montagehilfe für die Ronde (16) wirkt.

5. Dentalronden-Halter nach einem der vorhergehenden Ansprüche, **dadurch gekennzeichnet, dass** an der Innenseite des Übergangs zwischen dem Endschenkel (18,20) oder den Endschenkeln (18,20) des Halters (10) und dem Mittelschenkel (22) des Halters (10) mindestens eine Eckausnehmung (23) ausgebildet ist

6. Dentalronden-Halter nach Anspruch 4 oder 5, **dadurch gekennzeichnet, dass** der oder die Endschenkel (18,20) aus Kunststoff besteht bzw. bestehen und wegfräsbar ist bzw. sind, und dass verbleibende Bereiche des Endschenkels (18,20) oder der Endschenkel (18,20) die Dentalronde (16) formschlüssig lagern.

7. Dentalronden-Halter nach einem der vorhergehenden Ansprüche, **dadurch gekennzeichnet, dass** jedes Teil (12,14) als Halbschale (12,14) ausgebildet ist, die an ihrer radial nach innen weisenden Seite eine halbzylindrische Fläche aufweist, die ein Doppelklebeband aufnimmt oder in welcher ein Doppelklebeband aufnehmbar ist, mittels welches die Dentalronde (16) in den Halter (10) einklebbar ist.

8. Dentalronden-Halter nach einem der vorhergehenden Ansprüche, **dadurch gekennzeichnet, dass** die mindestens Teile (12,14) zueinander symmetrisch ausgebildet sind und/oder sich zu einem Kreisring ergänzen.

9. Dentalronden-Halter nach einem der vorhergehenden Ansprüche, **dadurch gekennzeichnet, dass** mindestens ein Formschlussprofil zur Lagerung des Halters (10) in oder an einem Fräshalter radial außen an dem Halter (10) ausgebildet ist und/oder dass der Halter (10) radial außen als Haltevorsprung mindestens teilweise umlaufend ein Formschlussprofil, insbesondere eine Hinterschneidung (42), aufweist.

10. Dentalronden-Halter nach einem der vorhergehenden Ansprüche, **dadurch gekennzeichnet, dass** der Halter (10) aus zwei, insbesondere halbkreisförmigen und aneinander lagerbaren, Teilen (12,14) besteht.

11. Dentalronden-Halter nach einem der vorhergehenden Ansprüche, **dadurch gekennzeichnet, dass** radial einwärts des Halters (10), und/oder radial einwärts eines Endschenkels (18,20) des Halters (10), sich ein Deckel erstreckt, der den Innenraum des Halters (10) und damit eine ggf. dort aufgenommene Dentalronde (16) abdeckt.

12. Dentalronden-Halter oder Anordnung nach Anspruch 11, **dadurch gekennzeichnet, dass** der Deckel an einem der Teile (12,14) angelenkt ist und/oder, dass der Deckel mit dem Halter (10), insbesondere mit dessen weicherer Komponente, stoffschlüssig verbunden ist und die Verbindungslinie eine Sollbruchstelle bildet, und/oder, dass der Deckel mit einer insbesondere aufklappbaren Abziehlasche versehen ist.

13. Dentalronden-Halter nach einem der vorhergehenden Ansprüche, **dadurch gekennzeichnet, dass** bei der Vormontage der Dentalronde (16) und dem Halter (10) zwischen der Dentalronde (16) und dem Halter (10) ein Luftspalt ausgebildet ist, der insbesondere zwischen 0,1 mm und 0,5 mm beträgt, und dass angrenzend an den Luftspalt ein expandierbarer Klebstoff, insbesondere aus PUR, eingebracht ist, über dessen Expansion die Dentalronde (16) in dem Halter (10) fixierbar ist.

## Claims

1. A dental round blank holder, **characterized in that** the holder (10) consists of at least two parts (12, 14) which are intended to surround and/or to mount a dental round blank (16), in particular to fix it in a non-positive, integrally bonded and/or form-fitting manner, and that the parts (12, 14) each have latching devices (28, 30) at the ends by means of which latching devices (28, 30) the parts (12, 14) can be latched to one another.

2. A dental round blank holder as claimed in claim 1 **characterized in that**, upon snapping-in of the latching devices (28, 30), the holder (10) is configured to clamp around and fix the dental round blank (16) non-positively, in particular under pre-stressing.

3. A dental round blank holder as claimed in any one of the preceding claims, **characterized in that** the holder (10) comprises plastic material or consists of plastic material and/or that it is configured on its inner circumference in such a way that it can be fastened to the dental round blank (16) by welding, shrinking and/or adhesion.

4. A dental round blank holder as claimed in any one of the preceding claims, **characterized in that** an end leg (18, 20) of the holder (10) extends radially inwardly on the upper side (24) and/or the lower side of the holder (10), with which end leg (18, 20) or with which end legs (18, 20) a dental round blank (16) can be mounted in a form-fitting manner, and/or that the holder (10) has a C-shaped profile or an L-shaped profile in cross-section, and in particular that the inner side of the L-shaped profile acts as a stop and mounting aid for the round blank (16).

5. A dental round blank holder as claimed in any one of the preceding claims, **characterized in that** at least one corner recess (23) is configured on the inner side of the transition between the end leg (18, 20) or the end legs (18, 20) of the holder (10) and the middle leg (22) of the holder (10).

6. A dental round blank holder as claimed in claim 4 or 5, **characterized in that** the end leg(s) (18, 20) consist(s) of plastic material and can be milled away, and that remaining regions of the end leg (18, 20) or of the end legs (18, 20) mount the dental round blank (16) in a form-fitting manner.

7. A dental round blank holder as claimed in any one of the preceding claims, **characterized in that** each part (12, 14) is configured as a half-shell (12, 14) which has a semicylindrical surface on its radially inwardly facing side, which surface receives a double-sided adhesive tape or in which a double-sided adhesive tape can be received, by means of which the dental round blank (16) can be glued into the holder (10).

8. A dental round blank holder as claimed in any one of the preceding claims, **characterized in that** the at least two parts (12, 14) are formed symmetrically with respect to each other and/or complement each other to form a circular ring.

9. A dental round blank holder as claimed in any one of the preceding claims, **characterized in that** at least one form-fitting profile for mounting the holder (10) in or on a milling holder is configured radially on the outside of the holder (10), and/or **in that**, radially on the outside, the holder (10) comprises, as a holding projection, at least partially circumferentially, a form-fitting profile, in particular an undercut (42).

10. A dental round blank holder as claimed in any one of the preceding claims, **characterized in that** the holder (10) consists of two parts (12, 14), which in particular are semicircular and can be mounted on each other.

11. A dental round blank holder as claimed in any one of the preceding claims, **characterized in that**, radially inwardly of the holder (10), and/or radially inwardly of an end leg (18, 20) of the holder (10), a cover extends which covers the inner space of the holder (10) and therefore a dental round blank (16) which may be received therein.

12. A dental round blank holder or arrangement as claimed in claim 11, **characterized in that** the cover is articulated on one of the parts (12, 14), and/or that the cover is connected in an integrally bonded manner with the holder (10), in particular with the softer component thereof, and the connecting line forms a desired breaking point, and/or that the cover is provided with a tear-off strip, in particular one which can unfold.

13. A dental round blank holder as claimed in any one of the preceding claims, **characterized in that** when preassembling the dental round blank (16) and the holder (10), an air gap is formed between the dental round blank (16) and the holder (10) and amounts in particular to between 0.1 mm and 0.5 mm, and that, adjacent to the air gap, an expandable adhesive, in particular made of PUR, is introduced, by means of the expansion of which the dental round blank (16) can be fixed in the holder (10).

## Revendications

1. Support de rondelle dentaire, **caractérisé en ce que** le support (10) est constitué d'au moins deux parties (12, 14) destinées à entourer et/ou à loger une rondelle dentaire (16), en particulier à la fixer par adhérence mécanique, adhérence de matière et/ou adhérence par complémentarité de forme et les parties (12, 14) présentent chacun à son extrémité un dispositif d'encliquetage (28, 30) au moyen desquels les pièces (12, 14) peuvent être encliquetées ensemble.

2. Support de rondelle dentaire selon la revendication 1, **caractérisé en ce que** le support (10) est conçu de telle manière que, lors de l'encliquetage des dispositifs d'encliquetage (28, 30), il serre et fixe la rondelle dentaire (16) par adhérence mécanique, en particulier sous précontrainte.

3. Support de rondelle dentaire selon l'une des revendications précédentes, **caractérisé en ce que** le support (10) présente une matière plastique ou est constitué d'une matière plastique et/ou **en ce qu'**il est formé sur sa circonférence intérieure de manière à pouvoir être fixé à la rondelle dentaire (16) par soudage, rétrécissement et/ou collage.

4. Support de rondelle dentaire selon l'une des revendications précédentes, **caractérisé en ce qu'**une branche d'extrémité (18, 20) du support (10) s'étend radialement vers l'intérieur sur la face supérieure (24) et/ou la face inférieure du support (10), et avec cette branche d'extrémité (18, 20) ou avec ces branches d'extrémité (18, 20) une rondelle dentaire (16) peut être logée par complémentarité de forme et/ou **en ce que** le support (10) présente en section transversale un profil en C ou un profil en L, et en particulier **en ce que** le côté intérieur du profil en L agit comme butée et aide au montage pour la rondelle (16).

5. Support de rondelle dentaire selon l'une des revendications précédentes, **caractérisé en ce qu'**au moins un évidement d'angle (23) est formé à l'intérieur de la transition entre la branche d'extrémité (18, 20) ou les branches d'extrémité (18, 20) du support (10) et la branche centrale (22) du support (10).

6. Support de rondelle dentaire selon la revendication 4 ou 5, **caractérisé en ce que** la ou les branches d'extrémité (18, 20) est ou sont en plastique et peut ou peuvent être fraisée, et **en ce que** les zones restantes de la branche d'extrémité (18, 20) ou des branches d'extrémité (18, 20) soutiennent la rondelle dentaire (16) par complémentarité de forme.

7. Support de rondelle dentaire selon l'une des revendications précédentes, **caractérisé en ce que** chaque partie (12, 14) est réalisée sous la forme d'une demi-coque (12, 14) qui présente sur sa face radialement orientée vers l'intérieur une surface semi-cylindrique qui accueille un ruban adhésif double face ou dans laquelle un ruban adhésif double face peut être absorbé au moyen duquel la rondelle dentaire (16) peut être collé dans le support (10).

8. Support de rondelle dentaire selon l'une des revendications précédentes, **caractérisé en ce que** les parties au moins (12, 14) sont symétriquement formées les unes par rapport aux autres et/ou se complètent pour former un anneau circulaire.

9. Support de rondelle dentaire selon l'une des revendications précédentes, **caractérisé en ce qu'**au moins un profil à complémentarité de forme pour loger le support (10) dans ou sur un support de fraisage est formé radialement à l'extérieur sur le support (10) et/ou **en ce que** le support (10) présente radialement à l'extérieur un profil à complémentarité de forme au moins partiellement périphérique en tant que saillie de retenue, en particulier une contre-dépouille (42).

10. Support de rondelle dentaire selon l'une des revendications précédentes, **caractérisé en ce que** le support de rondelle (10) est constitué de deux parties (12, 14), en particulier semi-circulaires et pouvant être logées l'une contre l'autre.

11. Support de rondelle dentaire selon l'une des revendications précédentes, **caractérisé en ce que**, radialement vers l'intérieur du support (10), et/ou radialement vers l'intérieur d'une branche d'extrémité (18, 20) du support (10), s'étend un couvercle qui recouvre l'intérieur du support (10) et donc toute rondelle dentaire (16) qui y est éventuellement logée.

12. Support de rondelle dentaire ou arrangement selon la revendication 11, **caractérisé en ce que** le couvercle est articulé sur l'une des pièces (12, 14) et/ou **en ce que** le couvercle est relié au support (10), en particulier à son composant le plus souple, et **en ce que** la ligne de connexion forme un point de rupture prédéterminé, et/ou **en ce que** le couvercle est pourvu d'une languette d'extraction qui peut être rabattable en particulier.

13. Support de rondelle dentaire selon l'une des revendications précédentes, **caractérisé en ce que**, lors du pré-assemblage de la rondelle dentaire (16) et du support (10), un espace d'air se forme entre la rondelle dentaire (16) et le support (10), qui est en particulier compris entre 0,1 mm et 0,5 mm, et **en ce qu'**une colle expansible, en particulier de PUR, est introduite à côté de l'espace d'air dont l'expansion permet de fixer la rondelle dentaire (16) dans le support (10).
